# EUROPÄISCHE PATENTSCHRIFT

(11) **EP 3 488 028 B1**
(45) Veröffentlichungstag und Bekanntmachung des Hinweises auf die Patenterteilung: **19.02.2020**
(21) Anmeldenummer: 17752009.5
(22) Anmeldetag: 14.07.2017
(51) Int. Cl.: C25B 1/00, C25B 15/08, C25B 9/18

(54) **VERFAHREN ZUR ELEKTROCHEMISCHEN HERSTELLUNG VON AMMONIAK**
PROCESS FOR ELECTROCHEMICAL PREPARATION OF AMMONIA
PROCÉDÉ DE PRODUCTION D'AMMONIAC PAR VOIE ÉLECTROCHIMIQUE

(30) Priorität: 21.07.2016 DE 102016213360
(43) Veröffentlichungstag der Anmeldung: 29.05.2019
(73) Patentinhaber: thyssenkrupp Industrial Solutions AG, 45143 Essen (DE); thyssenkrupp AG, 45143 Essen (DE)
(72) Erfinder: JOHANNING, Joachim, 46045 Oberhausen (DE); DOSTAL, Daniela, 44225 Dortmund (DE)
(74) Vertreter: thyssenkrupp Intellectual Property GmbH
(86) Internationale Anmeldenummer: PCT/EP2017/067820
(87) Internationale Veröffentlichungsnummer: WO 2018/015287

(56) Entgegenhaltungen:
- WO-A1-2017/149718
- DE-A1- 3 813 976
- JP-A- 2016 014 176
- US-A1- 2008 193 360
- US-A1- 2016 138 176

## Beschreibung

Die vorliegende Erfindung betrifft ein Verfahren zur Herstellung von Ammoniak durch Elektrolyse unter Verwendung mindestens einer Elektrolysezelle, wobei in die Elektrolysezelle als erstes Edukt Stickstoff eingespeist wird und als zweites Edukt für die Elektrolyse Wasser oder Wasserdampf verwendet wird, wobei mindestens ein der Elektrolyse nachgeschalteter Schritt c) vorgesehen ist, in dem eine Abtrennung sonstiger Komponenten von dem Ammoniak erfolgt, insbesondere eine mindestens teilweise Abtrennung einer oder mehrerer Komponenten aus der Gruppe umfassend Stickstoff, Wasser, Argon und Wasserstoff.

Ammoniak ist einer der wichtigsten Grundstoffe. Die Weltjahresproduktion beträgt derzeit etwa 170 Millionen Tonnen. Der größte Teil des Ammoniaks wird zur Herstellung von Düngemitteln verwendet. Die großtechnische Herstellung verwendet heute weitgehend die von Haber und Bosch zu Beginn des 20. Jahrhunderts entwickelte Hochdrucksynthese in Festbettreaktoren mit Eisen als katalytisch aktiver Hauptkomponente, basierend auf einem stöchiometrisch zusammengesetzten Synthesegas mit den Hauptkomponenten Wasserstoff und Stickstoff. Die Erzeugung des Synthesegases erfolgt vorwiegend über die Erdgasroute. Nachteilig sind hierbei die großen Mengen an anfallendem Kohlendioxid.

Bedingt durch die für die Ammoniaksynthese erforderlichen hohen Temperaturen von beispielsweise ca. 400 °C bis ca. 500 °C und Drücke in der Größenordnung von beispielsweise ca. 100 bar bis ca. 450 bar, sowie die Wirkungen der Prozessmedien auf die Wertstoffe unter diesen Bedingungen, sind die Ammoniak-Synthesereaktoren technisch sehr anspruchsvolle Apparate. Sie reagieren verhältnismäßig empfindlich auf Änderungen der Betriebsbedingungen. Jede Anlagenabstellung ist mit einer signifikanten Reduzierung der Lebensdauer verbunden.

Durch den exothermen Charakter der Ammoniak-Bildungsreaktion entstehen im Prozessverlauf verhältnismäßig große Wärmemengen. Für einen guten spezifischen Energieverbrauch des Gesamtprozesses müssen sie möglichst effizient genutzt werden. Generell ist die Abwärmenutzung mit thermodynamisch unvermeidbaren Verlusten verbunden. Es hat deshalb nicht an Versuchen gefehlt, Alternativen zum Haber-Bosch-Verfahren zu entwickeln, die ohne die hohen Temperaturen und Drücke arbeiten. Im Haber-Bosch-Verfahren wird die fundamentale Schwierigkeit der Aktivierung des sehr reaktionsträgen Stickstoff-Moleküls durch den Einsatz spezifisch sehr aktiver Katalysatoren in Kombination mit verhältnismäßig hohen Temperaturen überwunden. Eine Alternative für die Bereitstellung der erforderlichen Aktivierungsenergie ist der Einsatz elektrischer Energie. Hierfür existieren inzwischen im Labormaßstab funktionsfähige Lösungskonzepte.

Viele Laborkonzepte zur Elektrolyse von Ammoniak basieren auf dem Einsatz von Wasserstoff und Stickstoff in einer Zelle. Hierbei muss zunächst der Wasserstoff konventionell erzeugt werden, verbunden mit den oben aufgezeigten Nachteilen. Daneben gibt es immer wieder Bestrebungen Ammoniak in einer Elektrolysezelle aus Stickstoff und Wasser herzustellen.

In der US 2010/0200418 A1 wird ein relativ neues, erfolgversprechendes Elektrolyse-Zellen-Konzept beschrieben, bei dem gleichzeitig Wärme und Elektrizität aus Sonnenlicht gewonnen werden zur elektrochemischen Herstellung von Substanzen wie beispielsweise Kohlenstoff oder Eisen in energiereichen Verfahren (sogenannter STEP-Prozess: Solar Thermal Electrochemical Photo Process). Bei diesem Verfahren wird als Elektrolyt geschmolzenes Alkalicarbonat eingesetzt und die Temperaturen in der Elektrolyse liegen zumeist bei mehr als 650 °C.

Ein großtechnisches Anlagenkonzept, in dem überschüssige elektrische Energie effizient genutzt wird zur Herstellung von Ammoniak in einer Elektrolysezelle aus den Edukten Stickstoff und Wasser, existiert bislang nicht.

In der DE 1 220 401 A wird ein Verfahren zur Erzeugung von Synthesegas für die Ammoniaksynthese und zur Herstellung von Ammoniak beschrieben, bei dem in einer Wasserelektrolyse mit Katalysatorelektroden die Kathode zusätzlich mit Luft bespült wird. Der Sauerstoff setzt sich dabei mit dem an der Kathode gebildeten Wasserstoff zu Wasser um und ein zur Synthese geeignetes Wasserstoff/Stickstoff-Gemisch wird erzeugt. Die Katalysatorelektrode kann so modifiziert werden, dass sie auch die Bildung von Ammoniak katalysiert, so dass bei der Reaktion Ammoniak bzw. ein Gemisch aus Ammoniak und Synthesegas erzeugt wird.

Die DE 10 2012 216 090 A1 beschreibt eine grüne Verbundanlage zur Herstellung von chemischen und petrochemischen Produkten, welche eine kombinierte Luftzerlegungs- und Kohlendioxidabscheidungsanlage umfasst, in der Kohlendioxid und Stickstoff gewonnen werden, und die weiterhin eine Elektrolyseeinheit zur Gewinnung von Wasserstoff umfasst, wobei der Stickstoff aus der kombinierten Luftzerlegungs- und Kohlendioxidabscheidungsanlage und der elektrolytisch gewonnene Wasserstoff zu verschiedensten chemischen Produkten umgesetzt werden, wobei neben Methanol, Synthesegas, Methan, Treibstoff auch Ammoniak genannt wird. Die Verbundanlage umfasst eine weitere Einheit, in der erneuerbare Energie erzeugt wird, die für den Betrieb der Luftzerlegungsund Kohlendioxidabscheidungsanlage und der Elektrolyseeinheit benötigt wird.

Eine Elektrolysezelle zur elektrochemischen Synthese von Ammoniak wird beispielsweise in der US 6,712,950 B1 beschrieben. Bei diesem Verfahren wird keine wässrige Lösung verwendet, sondern ein geschmolzenes Lithiumsalz (Li₃N) als Elektrolyt wird bei hohen Temperaturen von zwischen 300 °C und 600 °C elektrolysiert. Zur Anode wird Wasserstoff geleitet und negativ geladene Nitrid-Ionen wandern in der Schmelze zur Anode, wo sie zu atomarem Stickstoff oxidiert werden und mit Wasserstoff zu Ammoniak reagieren.

WO 2014/160 792 A1 beschreibt ein Verfahren zur elektrochemischen Umwandlung von molekularem Stickstoff und Wasserstoff zu Ammoniak in einer elektrochemischen Zelle in alkalischer Lösung unter Verwendung von Kohlenstoff-Elektroden, die mit Platin-Iridium elektroplattiert sind. Hier kann bei vergleichsweise niedrigen Temperaturen von 25 °C bis 205 °C gearbeitet werden.

In der EP 058 784 B1 wird ein Verfahren zur kontinuierlichen Herstellung von Stickoxid als Ausgangsstoff zur Salpetersäuregewinnung beschrieben. Bei diesem Verfahren wird eine Hochtemperaturelektrolysezelle eingesetzt, die bei Temperaturen im Bereich von 800 °C bis 1000 °C arbeitet und einen für den Sauerstoffionentransport geeigneten Hochtemperatur-Feststoffelektrolyten verwendet. Die Elektrolysezelle umfasst eine poröse Kathode, die mit Wasserdampf beaufschlagt wird, sowie eine poröse Anode, die mit NH₃ beaufschlagt wird. Der an der Kathode gebildete Wasserstoff wird in einer konventionellen NH₃-Synthese-Apparatur nach dem Haber-Bosch-Verfahren mit Stickstoff umgesetzt und ein Teil des so hergestellten Ammoniaks wird zur Speisung der Anode der Elektrolysezelle verwendet. Das Ammoniak wird mit dem bei der Wasserelektrolyse anfallenden naszierenden Sauerstoff in der Elektrolysezelle zu Stickoxid und Wasserdampf oxidiert. Bei diesem Verfahren wird somit in der Elektrolysezelle Wasserdampf elektrolysiert, während die NH₃-Herstellung in der konventionellen Haber-Bosch-Apparatur und nicht in der Elektrolysezelle erfolgt.

In der US 2008/0193360 A1 wird ein Verfahren zur wasserfreien Herstellung von Ammoniak beschrieben, bei dem auf der einen Seite eines Protonen leitenden Elektrolyten aus Wasserdampf Protonen abgetrennt werden und diese Protonen mit aus Stickstoff gebildeten Nitridionen auf der anderen Seite des Protonen leitenden Elektrolyten zur Reaktion gebracht werden zur Herstellung von wasserfreiem Ammoniak. Als erstes Edukt wird hier Stickstoff in die Elektrolysezelle eingespeist und als zweites Edukt Wasserdampf. Die Reaktion wird bei einem Druck von zwischen 10 und 200 atm und bei einer Temperatur von zwischen 400 °C und 800 °C durchgeführt. Als Protonen leitender Elektrolyt wird ein Perowskit verwendet, der mit einem Lanthanid dotiert ist. Dieser Protonen leitende Elektrolyt liegt als rohrförmiger Feststoff-Elektrolyt vor.

Aus der DE 10 2015 211 391 A1 ist eine Vorrichtung zur Synthese von Kohlenwasserstoffen oder Ammoniak bekannt, bei der ebenfalls eine Wasserstoffionen leitende rohrförmige elektrochemische Zelle mit einem rohrförmigen Festelektrolyten verwendet wird. Als Edukte werden Wasserdampf und Stickstoff der Elektrolysevorrichtung zugeführt. Bei der Ammoniaksynthese werden hier die Edukte auf einen Druck von 30 MPa verdichtet. Im Synthesebereich wird eine Schüttung von Katalysatorpellets aus Magnetit mit Kobalt als Promoter verwendet. Es wird erwähnt, dass das entstehende Ammoniak einem Kondensator zugeführt wird und anschließend in flüssiger Form gelagert wird. In dieser Druckschrift werden jedoch keine weiteren Trennschritte zur Aufbereitung des Produktstroms beschrieben.

In einem Artikel von Stuart Licht et al. in Science 345 (6197), 07.08.2014, Seiten 637-640 wird die elektrochemische Ammoniaksynthese aus Stickstoff und Dampf in Suspensionen von geschmolzenen Hydroxid-Salzen mit einem Katalysator auf Basis von nanoskaligem Eisenoxid beschrieben. Es wird jedoch darauf hingewiesen, dass die Katalysator-Suspension nur für wenige Stunden stabil ist. Bei diesem Artikel handelt es sich um eine wissenschaftliche Studie, in der keine Schritte für die Aufbereitung und Reinigung des Ammoniaks durch Trennprozesse beschrieben werden.

Die Aufgabe der vorliegenden Erfindung besteht darin, ein Verfahren zur Herstellung von Ammoniak in einer Elektrolysezelle zur Verfügung zu stellen, welches für eine Anwendung in großtechnischen Anlagen geeignet ist.

Die Lösung dieser Aufgabe liefert ein Verfahren zur elektrochemischen Herstellung von Ammoniak mit den Merkmalen des Anspruchs 1.

In dem Verfahren ist mindestens ein der Elektrolyse nachgeschalteter Schritt vorgesehen, in dem eine Abtrennung sonstiger Komponenten von dem Ammoniak erfolgt, insbesondere eine mindestens teilweise Abtrennung einer oder mehrerer Komponenten aus der Gruppe umfassend Stickstoff, Wasser, Argon und Wasserstoff.

Erfindungsgemäß werden in einer ersten Einrichtung Stickstoff und gegebenenfalls Argon aus dem aus der Elektrolysezelle abgeführten Produktstrom abgetrennt und in einer der ersten Einrichtung im Strömungsweg nachgeschalteten weiteren Einrichtung erfolgt eine Abtrennung von Wasser aus dem verbleibenden Ammoniak-haltigen Produktstrom.

Diese Abtrenn- bzw. Reinigungsschritte sind in der Regel sinnvoll, um das Ammoniak als Verfahrensprodukt in der gewünschten Spezifikation zu erhalten.

Bislang existiert kein Verfahren für die großtechnische Herstellung von Ammoniak basierend auf einer Elektrolysezelle, in der Wasser und Stickstoff als Ausgangsstoffe eingesetzt werden. Daher wurde im Rahmen der vorliegenden Erfindung ein Konzept für ein Verfahren sowie eine Anlage entwickelt, in der diese spezielle Elektrolysezelle zum Einsatz kommt.

Die Gewinnung der Edukte ist der Ammoniak-Elektrolyse vorgeschaltet. Vorzugsweise wurde gemäß der Erfindung der als erstes Edukt eingesetzte Stickstoff zuvor in einer Luftzerlegungsanlage gewonnen. In diesem Fall kann das in der Luft ebenfalls vorkommende Argon vor der Einspeisung des Stickstoffs in die Elektrolysezelle abgetrennt werden, so dass der eingesetzte Stickstoff kein Argon enthält. Vorteilhaft ist dabei, dass die Purgemenge im Prozess verringert werden kann. Im besten Fall entfällt der Purge vollständig. "Purge" bedeutet in Verfahren dieser Art, bei denen ein Gasgemisch im Kreislauf geführt wird, dass Inertgase wie beispielsweise Argon aus dem Kreislauf ausgeschleust werden, da sie sich sonst im Produktstrom anreichern. Wenn durch den Purge inerte Gase ausgeschleust werden, bedeutet das aber auch immer den Verlust eines Anteils der Edukte und des Produktgases, wobei wenn diese zurückgewonnen werden sollen, weitere ggf. aufwändige Schritte der Aufbereitung notwendig sind.

Für die Ammoniaksynthese inerte Purgegase können, da diese in der Regel auch Wasserstoff enthalten, gemäß einer bevorzugten Weiterbildung der Erfindung wenigstens teilweise als Brennstoffe für die Erzeugung von im Verfahren benötigtem Wasserdampf eingesetzt werden.

Dabei werden die Effektivität und die Ausbeute des Verfahrens erhöht, wenn wenigstens eine der in Schritt c) abgetrennten Komponenten Stickstoff und Wasser in den Elektrolyseprozess zurückgeführt wird, vorzugsweise werden beide Komponenten als Edukte in den Elektrolyseprozess zurückgeführt.

Bei der Elektrolyse an der Anode als Nebenprodukt entstehender Sauerstoff wird vorzugsweise aus der Elektrolysezelle abgeführt, ggf. gereinigt und abgetrennt.

Die Abtrennung des bei der Elektrolyse gewonnenen Ammoniaks erfolgt bevorzugt in mehreren Teilschritten, wobei insbesondere das Ammoniak in mindestens einem weiteren Schritt d) ggf. nach Abtrennung sonstiger Komponenten gemäß Schritt c) in einer Kälteanlage gereinigt wird.

Der als zweites Edukt eingesetzte Wasserdampf kann beispielsweise in einem Dampfkessel erzeugt werden. Alternativ können die Edukte Wasserdampf und Stickstoff aber auch beispielsweise aus einem Betriebsmittelnetz kommen.

Gemäß einer möglichen bevorzugten Variante wird bei dem erfindungsgemäßen Verfahren in die Elektrolysezelle flüssiges Wasser eingespeist und der als zweites Edukt verwendete Wasserdampf wird in der Elektrolysezelle durch Energiezufuhr und Verdampfen von eingespeistem Wasser erzeugt.

Die elektrolytische Umsetzung von Stickstoff und Wasser zu Ammoniak erfolgt gemäß der Erfindung vorteilhaft bei erhöhten Temperaturen, insbesondere bei einer Temperatur von wenigstens etwa 150 °C.

Vorzugsweise erfolgt gemäß der Erfindung die elektrolytische Umsetzung von Stickstoff und Wasser zu Ammoniak bei erhöhtem Druck, insbesondere bei einem Druck von wenigstens etwa 1000 kPa (10 bar).

Es können bei dem erfindungsgemäßen Verfahren zwei oder mehrere Elektrolysezellen vorgesehen sein, die ggf. diskontinuierlich betrieben werden.

Gegenstand der vorliegenden Erfindung ist weiterhin eine Anlage zur Herstellung von Ammoniak umfassend:
--wenigstens eine Elektrolysezelle geeignet zur Erzeugung von Ammoniak;
--wenigstens eine Einrichtung zur Zuführung von gasförmigem Stickstoff zu dieser Elektrolysezelle;
--wenigstens eine Einrichtung zur Zuführung von Wasserdampf oder flüssigem Wasser zu dieser Elektrolysezelle;
--wenigstens eine Einrichtung zum Abführen eines Produktstroms aus dieser Elektrolysezelle;
--wenigstens eine Einrichtung zur Abtrennung einer oder mehrerer von Ammoniak verschiedener Komponenten aus dem aus der Elektrolysezelle abgeführten Produktstrom und
--wenigstens eine Einrichtung zur Rückführung von Wasser oder Wasserdampf zu der Elektrolysezelle.

Vorzugsweise umfasst diese Anlage weiterhin:
--wenigstens eine Einrichtung zur Rückführung von Stickstoff zu der Elektrolysezelle.

Gegebenenfalls umfasst die erfindungsgemäße Anlage weiterhin:
--wenigstens eine der Einrichtung zur Abtrennung von Ammoniak verschiedener Komponenten nachgeschaltete Kälteanlage zur Aufreinigung des Ammoniaks.

Vorzugsweise umfasst die erfindungsgemäße Anlage weiterhin wenigstens eine der Elektrolysezelle vorgeschaltete Luftzerlegungsanlage, in der Stickstoff erzeugt wird, welcher der Elektrolysezelle zugeführt wird.

Vorzugsweise umfasst die erfindungsgemäße Anlage weiterhin wenigstens einen Dampferzeuger, in dem Wasserdampf erzeugt wird, welcher der Elektrolysezelle zugeführt wird.

Vorzugsweise umfasst die erfindungsgemäße Anlage weiterhin wenigstens eine Einrichtung zur Abtrennung von in einem aus der Elektrolysezelle abgeführten Nebenproduktstrom enthaltenem Sauerstoff, insbesondere einen Separator, in dem Wasser aus einem Sauerstoffstrom entfernt wird.

Besonders bevorzugt umfasst die erfindungsgemäße Anlage weiterhin wenigstens eine erste Einrichtung zur Abtrennung von Stickstoff und ggf. Argon aus dem aus der Elektrolysezelle abgeführten Produktstrom und eine dieser im Strömungsweg nachgeschaltete weitere Einrichtung zur Abtrennung von Wasser aus dem verbleibenden ammoniakhaltigen Produktstrom.

Besonders bevorzugt umfasst die erfindungsgemäße Anlage zwei oder mehrere vorzugsweise jeweils diskontinuierlich betreibbare Elektrolysezellen, wodurch ein kontinuierlicher Betrieb der Anlage realisiert werden kann.

Das erfindungsgemäße Verfahren basiert im Prinzip hauptsächlich auf der Abfolge von mindestens drei Prozessschritten. Der erste Prozessschritt umfasst eine Elektrolyse, in der aus den Edukten Stickstoff und Wasser Ammoniak erzeugt wird.

Die Gewinnung dieser Edukte ist dem ersten Prozessschritt vorgeschaltet. Der Stickstoff kann beispielsweise in einer Luftzerlegungsanlage gewonnen werden. Hierbei kann das in der Luft ebenfalls vorkommende Argon ebenfalls separat abgetrennt werden, so dass der eingesetzte Stickstoff kein Argon enthält.

Die Vorrichtung zur Erzeugung von Ammoniak aus Stickstoff und Wasser kann aus mehreren Zellen-Elementen bestehen. Neben Ammoniak an der Kathode entsteht an der Anode als Nebenprodukt Sauerstoff. Das entstehende Ammoniak enthält auch die nicht umgesetzten Edukte Stickstoff und Wasserdampf und je nach Ausführungsform der LZA (Luftzerlegungsanlage) auch Argon. In der elektrischen Zelle kann je nach Betriebsbedingungen auch Wasserstoff entstehen. Mit den gewählten Drücken und Temperaturen wird jedoch die unerwünschte H₂-Bildung weitgehend unterdrückt.

Um das Produkt Ammoniak in der gewünschten Spezifikation zu erhalten, erfolgen bevorzugt mindestens zwei weitere Prozessschritte. Zunächst erfolgt die Ammoniak-Abtrennung, die wiederum aus mehreren Einzelschritten bestehen kann. Hierbei können aufgrund des Konzepts der vorliegenden Erfindung sowohl Stickstoff als auch Wasser so abgetrennt werden, dass diese Komponenten wieder als Edukte eingesetzt werden können. Ein Teil des abgetrennten Wassers kann bevorzugt zur Aufreinigung genutzt werden. Enthält der eingesetzte Stickstoff Argon, wird vorzugsweise ein Teil des recycelten Stickstoff-Argon-Gemisches abgeführt.

Im dritten Prozessschritt wird dann gemäß einer Weiterbildung der Erfindung das Ammoniak vorzugsweise in einer Kälteanlage so aufgereinigt, dass es der typischen Produktspezifikation entspricht. Die abgetrennten Inertgase werden vorzugsweise dem vorgelagerten Prozessschritt zugeführt.

Nachfolgend wird die vorliegende Erfindung unter Bezugnahme auf die beiliegenden Zeichnungen näher beschrieben. Dabei zeigen:
Figur 1 ein schematisch vereinfachtes Blockdiagramm einer beispielhaften Ausführungsvariante des erfindungsgemäßen Verfahrens;
Figur 2 ein detaillierteres schematisches Fließbild einer weiteren beispielhaften Ausführungsvariante des erfindungsgemäßen Verfahrens;
Figur 3 ein noch detaillierteres Diagramm einer beispielhaften Anlagenkonzeption gemäß der vorliegenden Erfindung.

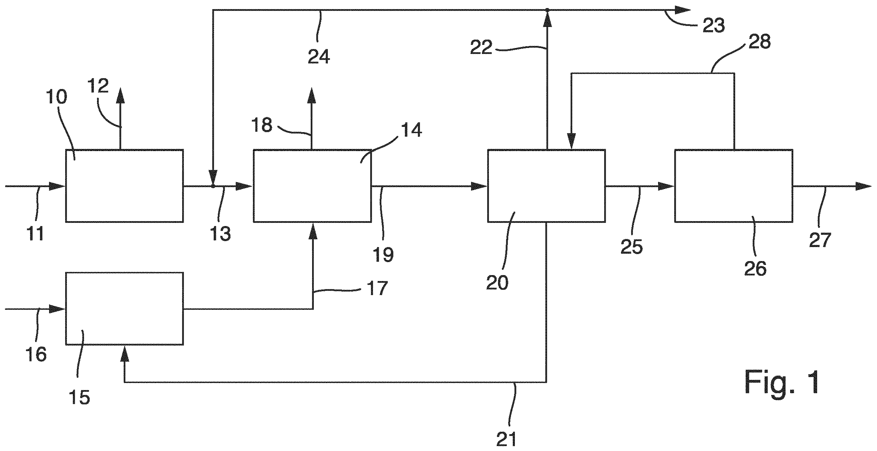

Zunächst wird auf Figur 1 Bezug genommen und anhand dieser schematischen Darstellung wird eine erste beispielhafte Ausführungsvariante eines erfindungsgemäßen Verfahrens näher beschrieben. Eine Anlage zur Durchführung des Verfahrens umfasst beispielsweise eine Luftzerlegungsanlage 10, der über eine Eingangsleitung 11 Luft zugeführt wird. In der Luftzerlegungsanlage 10 wird die Luft in ihre Bestandteile zerlegt. Anlagen dieser Art sind aus dem Stand der Technik an sich bekannt und daher erübrigt sich an dieser Stelle eine detailliertere Erläuterung der Luftzerlegungsanlage 10. Aus dieser Luftzerlegungsanlage 10 wird über eine Ausgangsleitung 12 die für die Ammoniakherstellung nicht benötigte Komponente Sauerstoff abgeführt. Der bei der Luftzerlegung erhaltene Stickstoff wird als erstes Edukt (ggf. mit Beimischungen von Argon) über die Zuführleitung 13 einer Elektrolysezelle 14 zugeführt.

Die in Figur 1 dargestellte Anlage umfasst weiterhin einen Dampferzeuger 15, dem über die Eingangsleitung 16 flüssiges Wasser zugeführt wird. Der in dem Dampferzeuger 15 erzeugte Wasserdampf wird als zweites Edukt über die Zuführleitung 17 der Elektrolysezelle 14 zugeführt. In der Elektrolysezelle 14 anfallender Sauerstoff und ggf. Wasser können über die Leitung 18 aus der Elektrolysezelle 14 abgeführt werden. Das bei der Elektrolyse in der Elektrolysezelle 14 erzeugte Produkt Ammoniak und in diesem noch enthaltene Verunreinigungen wie insbesondere Wasserdampf, Stickstoff, Wasserstoff und Argon werden über die Leitung 19 in eine erste Trennvorrichtung 20 geleitet, in der eine Abtrennung des Ammoniaks von weiteren gasförmigen Bestandteilen erfolgt. In dieser Trennvorrichtung 20 abgetrenntes Wasser kann über eine Rückführleitung 21 in den Dampferzeuger 15 zurückgeführt werden. Die in der Trennvorrichtung 20 abgetrennten Komponenten Stickstoff, Wasserstoff und Argon können gegebenenfalls als Purge über die Leitungen 22 und 23 aus dem Kreislauf ausgeschleust werden, wenn eine Anreicherung von Argon im System vermieden werden soll. Die Leitung 22 führt aber nicht nur zu der Leitung 23, sondern sie führt zu einer Zweigstelle, so dass dort die Möglichkeit besteht, die in der Trennvorrichtung 20 abgetrennten Bestandteile Wasserstoff und Stickstoff über die Rückführleitung 24 wieder zu der Zuführleitung 13 zu leiten und über diese Zuführleitung 13 diese Gase als Edukte erneut in die Elektrolysezelle einzuspeisen.

Der in der Trennvorrichtung 20 abgetrennte Ammoniak wird über die Leitung 25 einer zweiten Trennvorrichtung 26 zugeführt, bei der es sich um eine Kälteanlage handelt, in der das Ammoniak durch Abtrennung weiterer inerter Gase gereinigt werden kann. In der Regel wird das Ammoniak in der Kälteanlage 26 verflüssigt und kann dann als flüssiges Ammoniak als Produkt über die Leitung 27 ausgeschleust werden. Die in der zweiten Trennvorrichtung/Kälteanlage 26 abgetrennten Inertgase können bei Bedarf über die Rückführleitung 28 in die erste Trennvorrichtung 20 zurückgeführt und dort abgetrennt und über die Leitung 22 abgeführt werden.

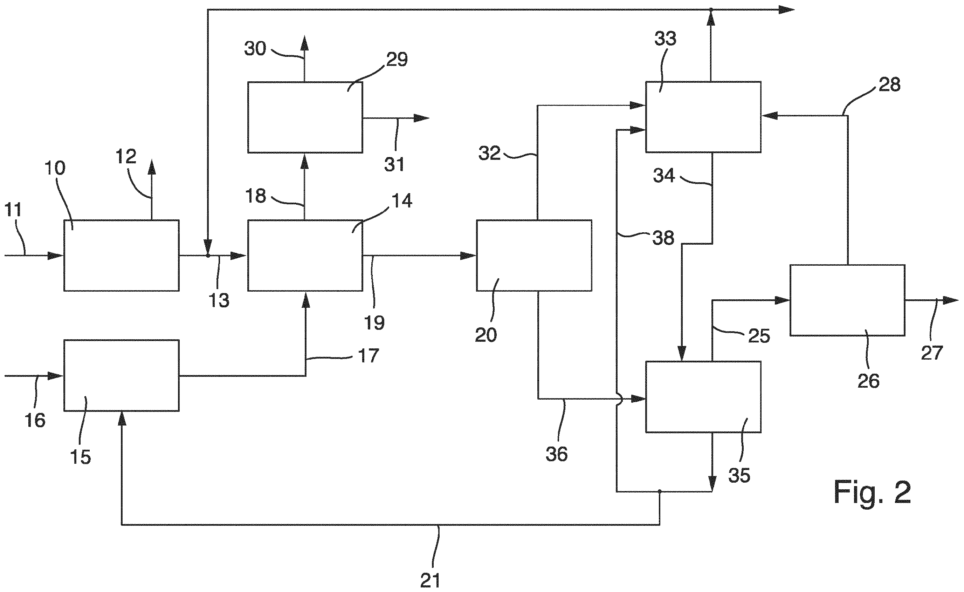

Nachfolgend wird auf die Figur 2 Bezug genommen und anhand dieses detaillierteren Fließbildes wird ein weiteres Ausführungsbeispiel der Erfindung erläutert. Dabei sind funktionell gleiche Anlagenkomponenten in der Regel mit den gleichen Bezugszeichen benannt. Über die Eingangsleitung 16 gelangt das flüssige Wasser in den Dampferzeuger 15 und von dort aus gelangt der Wasserdampf über die Zuführleitung 17 in die Elektrolysezelle 14. Der in der Luftzerlegungsanlage 10 erzeugte Stickstoff gelangt ggf. im Gemisch mit Argon über die Zuführleitung 13 ebenfalls in die Elektrolysezelle 14. Sauerstoff und Wasser werden über die Leitung 18 aus der Elektrolysezelle 14 abgeführt. Anders als bei der zuvor beschriebenen Variante ist in Figur 2 noch eine weitere Trennvorrichtung 29 vorgesehen, in die die Leitung 18 als Eingangsleitung mündet und in der eine weitere Trennung der beiden Komponenten Sauerstoff und Wasser voneinander erfolgen kann, so dass dann der Sauerstoff über die Leitung 30 einerseits und das Wasser über die Leitung 31 getrennt abgeführt werden können.

Die Trennvorrichtung zur Trennung der einzelnen Komponenten voneinander, die als Produktstrom mit dem Ammoniak über die Leitung 19 die Elektrolysezelle 14 verlassen, ist in Figur 2 etwas komplexer. Zunächst gelangt dieser Gasstrom in eine erste Trennvorrichtung 20, in der die beiden Komponenten Stickstoff und Argon einerseits von dem Produktstrom, welcher Ammoniak und Wasser enthält, abgetrennt werden. Stickstoff und Argon werden über eine Leitung 32 zu einer zweiten Trennvorrichtung 33 geleitet, in die auch rückgeführte Inertgase über die Leitung 28 eingespeist werden können. In der Trennvorrichtung 33 können gegebenenfalls Stickstoff und Argon von noch in diesem Gasstrom enthaltenem Ammoniak getrennt werden, wobei das dabei gewonnene Ammoniak über die Leitung 34 der Trennvorrichtung zugeführt werden kann.

Bei der Variante gemäß Figur 2 ist eine weitere Trennvorrichtung 35 vorgesehen, in die das in der Trennvorrichtung 20 abgetrennte Ammoniak über die Leitung 36 gelangt, die eine Eingangsleitung der Trennvorrichtung 35 ist. Die Ausgangsleitung 25 der Trennvorrichtung 35 führt das Ammoniak als Produktgas zu der als Kälteanlage ausgebildeten Trennvorrichtung 26 ab. In dieser weiteren Trennvorrichtung 35 kann ggf. noch im Produktstrom enthaltenes Wasser abgetrennt werden, um dann über die Rückführleitung 21 zum Dampferzeuger 15 zurückgeführt zu werden. Gegebenenfalls kann in der weiteren Trennvorrichtung 35 abgetrenntes Wasser über eine weitere Leitung 38 zu der anderen Trennvorrichtung 33 geleitet werden.

In der Trennvorrichtung 26 können von dem Ammoniak Inertgase abgetrennt und über die Leitung 28 ebenfalls der Trennvorrichtung 33 zugeführt werden. In der Trennvorrichtung 26 wird wie zuvor beschrieben das Ammoniakgas abgekühlt und dann als flüssiges Ammoniak über die Leitung 27 abgeführt.

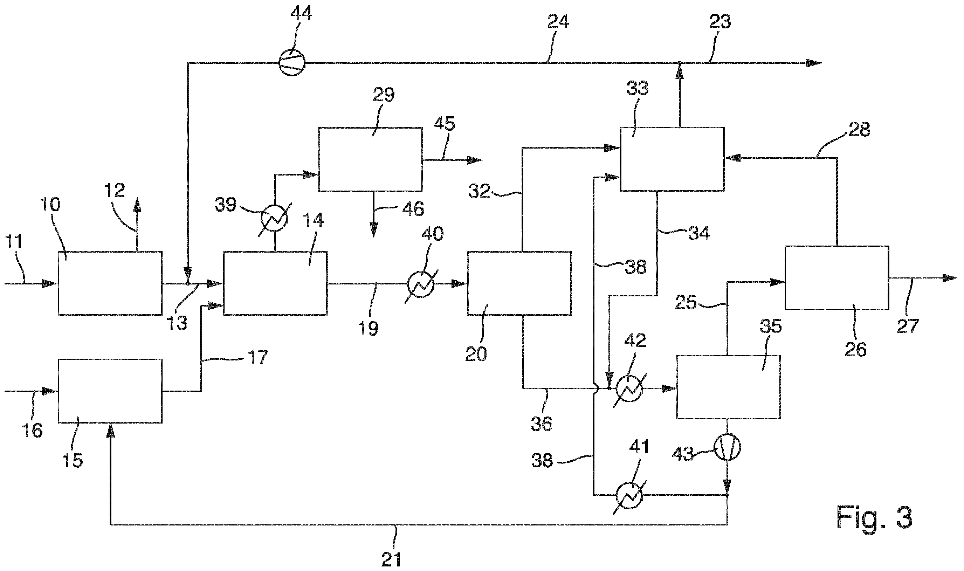

Nachfolgend wird unter Bezugnahme auf Figur 3 ein weiteres konkretes Ausführungsbeispiel der Erfindung erläutert. Dabei sind in Figur 3 bereits zuvor erwähnte Anlagenkomponenten mit den jeweils gleichen Bezugszeichen benannt. Das erste Edukt welches der Elektrolysezelle 14 über die Leitung 13 zugeführt wird, ist Stickstoff, der zuvor in der Luftzerlegungsanlage 10 gewonnen wurde. Das zweite Edukt ist Wasserdampf, der in dem Dampferzeuger 15 aus Wasser erzeugt und der Elektrolysezelle 14 über die Zuführleitung 17 zugeführt wird. In der Elektrolysezelle 14 erfolgt die Elektrolyse beispielsweise bei einer Temperatur im Bereich von etwa 250 °C und einem Druck in der Größenordnung von etwa 25 bara (bar absolut). Der aus der Elektrolysezelle abgeführte überschüssige Sauerstoff sowie Wasser werden über einen Wärmetauscher 39 geleitet, dort abgekühlt auf beispielsweise etwa 40 °C und in eine Trennvorrichtung 29 eingeleitet, in der die beiden Komponenten Sauerstoff 45 und Wasser 46 voneinander getrennt werden. Der Produktgasstrom 19 aus der Elektrolysezelle 14, der das Ammoniak neben weiteren Komponenten enthält, kann ebenfalls über einen Wärmetauscher 40 geleitet und dort abgekühlt werden, beispielsweise auf eine Temperatur von etwa 40 °C und wird dann der Trennvorrichtung 20 zugeführt. Dort werden Stickstoff und Argon von dem Ammoniak abgetrennt und dann einer Trennvorrichtung 33 zugeführt, bei der es sich um eine Kolonne handelt, in der mit Wasser Ammoniak abgetrennt werden kann, wobei das Wasser über die Leitung 38 durch einen weiteren Wärmetauscher 41 geführt werden kann.

Der das Ammoniak enthaltende Produktstrom 36 aus der Trennvorrichtung 20 kann über einen weiteren Wärmetauscher 42 erwärmt und der weiteren Trennvorrichtung 35 zugeführt werden, bei der es sich zum Beispiel um einen Desorber mit Reboiler und Rückflußkühler handelt, in der Wasser von dem ammoniakhaltigen Produktstrom abgetrennt und über eine Pumpe 43 und die Rückführleitung 21 zu dem Dampferzeuger 15 zurückgeführt wird. In der Trennvorrichtung 35 wird das Ammoniak zum Beispiel mittels Wärme weitgehend aus dem Ammoniak-Wassergemisch 36 ausgetrieben, so dass nach Rückkühlung im Kondenser ein abgekühlter Ammoniak-Produktstrom bei einer Temperatur von beispielsweise ca. 57 °C über die Leitung 25 in die Trennvorrichtung 26 gelangt, bei der es sich zum Beispiel um eine Ammoniakkompressionskälteanlage handelt, in der eine weitere Abtrennung von Inertgasanteilen und Wasser von dem Ammoniak erfolgt. Das Ammoniak verlässt die Kälteanlage 26 als gereinigter Produktstrom in flüssigem Aggregatzustand bei niedrigen Temperaturen von beispielsweise -33 °C und Atmosphärendruck über die Leitung 27, zum Beispiel für eine anschließende Lagerung in einem Tank.

Die die Kolonne 33 verlassenden Komponenten Stickstoff und Argon können teilweise als Purge über die Leitung 23 ausgeschleust werden bzw. der Stickstoff über die Rückführleitung 24 und den Verdichter 44 zu der Zuführleitung 13 zurückgeführt werden, um von dort als Edukt erneut in die Elektrolysezelle 14 eingespeist zu werden.

Nachfolgend wird die vorliegende Erfindung anhand eines weiteren Ausführungsbeispiels näher erläutert. In diesem Beispiel werden weitere bevorzugte Prozessparameter für die erfindungsgemäße elektrolytische Herstellung von Ammoniak genannt. Der in einer Luftzerlegungsanlage erhaltene Stickstoffstrom, der als ein Eduktstrom für das Verfahren verwendet wird, kann beispielsweise einen Argon-Anteil von weniger als 1 Mol-%, beispielsweise von 0.36 Mol-% enthalten, der in der Luftzerlegungsanlage nicht extra abgetrennt wird und somit in den Prozess mit eingetragen wird.

Der für das Verfahren als zweites Edukt benötigte Dampf kann zum Beispiel aus demineralisiertem Wasser gewonnen werden, das mit einer Pumpe auf einen erhöhten Druck von mehr als 20 bar, beispielsweise auf 25 bar gebracht und anschließend erhitzt wird, so dass das Wasser verdampft und eine Temperatur von mehr als 200 °C, beispielsweise 250 °C erreicht. Alternativ dazu wäre es auch möglich, das Wasser nur zu pumpen und den Dampf erst in der Elektrolysezelle zu erzeugen.

Beide oben genannte Edukte werden mit den dazugehörigen Recycle-Strömen zusammengebracht und miteinander vermischt. Aufgrund der niedrigeren Temperaturen der Recycle-Ströme sollte bevorzugt der Misch-Eduktstrom vor der Zelle erwärmt werden, um beim Eintritt in die Elektrolysezelle die dort gewünschte Temperatur von beispielsweise 250 °C erreicht zu haben.

Bei einem im Rahmen der vorliegenden Erfindung durchgeführten Elektrolyse-Versuch entstanden bedingt durch die räumliche Trennung der Elektrodenräume zwei Produktströme. Der Produktstrom aus dem Gasraum über der Anode enthielt sämtlichen entstandenen Sauerstoff und 75 % bis 85 %, beispielsweise 81,8 % des in den Produktströmen enthaltenen Wassers, da bei der Anodenreaktion pro Mol Sauerstoff zwei Mol Wasser entstehen. Das gewünschte Produkt Ammoniak wurde zusammen mit nicht umgesetzten Edukten aus dem Gasraum über der Kathode abgezogen.

Beide Produktströme werden zur Trennung zunächst deutlich abgekühlt. Anschließend werden jeweils mit Hilfe eines Flash-Kühlers Sauerstoff von Wasser bzw. Stickstoff und Argon von Ammoniak und Wasser getrennt. Da in dem aus Stickstoff und Argon bestehenden Strom noch zu viel Ammoniak enthalten ist, wird dieser in einer Kolonne mit Wasser ausgewaschen. Der so aufgereinigte Gasstrom enthält nur noch Mengen an Ammoniak im ppm-Bereich, insbesondere weniger als 20 ppm, zum Beispiel 7,83 ppm Ammoniak und kann somit als Recycle-Strom für Stickstoff verwendet werden. Es wird ein Purge durchgeführt, wodurch dafür gesorgt wird, dass sich Argon nicht im Kreislauf anreichern kann, indem ein prozentualer Anteil des Kreislaufstroms von beispielsweise weniger als 20 %, insbesondere weniger als 15 %, vorzugsweise zwischen etwa 5 % und etwa 15 %, zum Beispiel 10 % des Kreislaufstroms aus dem System abgeführt wird. Dabei ist zu beachten, dass es aufgrund der hierbei auftretenden Druckverluste vorteilhaft ist, einen Kompressor zu verwenden, um den Recycle-Strom auf das Druckniveau der Luftzerlegungsanlage zu bringen.

Die Trennung von Ammoniak und Wasser kann in einer zweiten Kolonne stattfinden. Aufgrund der hohen Löslichkeit von Ammoniak in Wasser ist es unvorteilhaft, an dieser Stelle einen Abscheider einzusetzen, da auch bei Temperaturen deutlich über dem Siedepunkt von Ammoniak nahezu das gesamte Ammoniak im Wasser gelöst bliebe. Das aus dem Sumpf der Kolonne erhaltene Wasser besitzt eine hohe Reinheit von mehr als 99 %, beispielsweise von bis zu 99,99 % und kann als Waschwasser in der ersten Kolonne eingesetzt werden, sowie als Recycle-Wasser, wobei für diesen Strom vorzugsweise eine Pumpe zu verwenden ist. Der Kopfstrom enthält Ammoniak in einem hohen Reinheitsgrad von mehr als 99 %, beispielsweise von bis zu 99,98 %, was zum einen durch die Reinheit des Wassers im Sumpf der Kolonne sowie durch eine spezifische Bauart der Kolonne bedingt ist, aufgrund derer insbesondere das Rückfluss-Verhältnis und das Verhältnis von Destillat zu Feedstrom spezifisch angepasst wird.

Als Kälteanlage kann beispielsweise ein mehrstufiger Ammoniakkondensator verwendet werden. Hier wird angestrebt, neben der Verflüssigung des Ammoniaks eine Senkung des Inertgasgehalts im Produktstrom zu erzielen, was durch den vorgenannten Ammoniakkondensator und einen Inertgaskühler erreicht wird. In der Kälteanlage werden mehrere, beispielsweise drei Kompressoren eingesetzt, um die dort vorgegebenen Druckniveaus zu erreichen. Dies ist günstiger als die Verwendung lediglich eines Kompressors. Die Wirkungsgrade der Kompressoren können beispielsweise im Bereich von 0,82 (polytrop) bis 0,98 (mechanisch) liegen.

Das Ammoniak verlässt die Kälteanlage als Flüssigkeit bei Atmosphärendruck, so dass eine anschließende Lagerung in einem Tank möglich ist.

### Bezugszeichenliste

- 10: Luftzerlegungsanlage
- 11: Eingangsleitung für Luft
- 12: Ausgangsleitung für O₂
- 13: Zuführleitung für N₂ zur Elektrolysezelle
- 14: Elektrolysezelle
- 15: Dampferzeuger
- 16: Eingangsleitung für Wasser
- 17: Zuführleitung Wasser/Wasserdampf zur Elektrolysezelle
- 18: Leitung zum Abführen von O₂ und H₂O
- 19: Leitung für den Produktstrom aus der Elektrolyse
- 20: erste Trennvorrichtung
- 21: Rückführleitung
- 22: Leitung
- 23: Leitung für Purge
- 24: Rückführleitung
- 25: Leitung für Ammoniak
- 26: Trennvorrichtung/Kälteanlage
- 27: Leitung für flüssiges Ammoniak
- 28: Rückführleitung
- 29: Trennvorrichtung
- 30: Leitung zum Abführen von Sauerstoff
- 31: Leitung zum Abführen von Wasser
- 32: Leitung für Stickstoff und Argon
- 33: Trennvorrichtung
- 34: Leitung
- 35: Trennvorrichtung
- 36: Leitung für Ammoniak/Wasser
- 38: Leitung
- 39: Wärmetauscher
- 40: Wärmetauscher
- 41: Wärmetauscher
- 42: Wärmetauscher
- 43: Pumpe
- 44: Verdichter
- 45: Ausgangsleitung für O₂
- 46: Ausgangsleitung für Wasser

## Patentansprüche

1. Verfahren zur Herstellung von Ammoniak durch Elektrolyse unter Verwendung mindestens einer Elektrolysezelle (14), wobei in die Elektrolysezelle
a) als erstes Edukt Stickstoff eingespeist wird und
b) als zweites Edukt für die Elektrolyse Wasser oder Wasserdampf verwendet wird,
wobei mindestens ein der Elektrolyse nachgeschalteter Schritt c) vorgesehen ist, in dem eine Abtrennung sonstiger Komponenten von dem Ammoniak erfolgt, insbesondere eine mindestens teilweise Abtrennung einer oder mehrerer Komponenten aus der Gruppe umfassend Stickstoff, Wasser, Argon und Wasserstoff,
**dadurch gekennzeichnet, dass** in einer ersten Einrichtung (20) Stickstoff und ggf. Argon aus dem aus der Elektrolysezelle (14) abgeführten Produktstrom abgetrennt werden und in einer der ersten Einrichtung (20) im Strömungsweg nachgeschalteten weiteren Einrichtung (35) eine Abtrennung von Wasser aus dem verbleibenden Ammoniak-haltigen Produktstrom erfolgt.

2. Verfahren zur Herstellung von Ammoniak nach Anspruch 1, **dadurch gekennzeichnet, dass** wenigstens eine der in Schritt c) abgetrennten Komponenten Stickstoff und Wasser in den Elektrolyseprozess rückgeführt wird, vorzugsweise beide Komponenten als Edukte in den Elektrolyseprozess rückgeführt werden.

3. Verfahren zur Herstellung von Ammoniak nach Anspruch 1 oder 2, **dadurch gekennzeichnet, dass** der als erstes Edukt gemäß eingesetzte Stickstoff zuvor in einer Luftzerlegungsanlage (10) gewonnen wurde.

4. Verfahren zur Herstellung von Ammoniak nach einem der Ansprüche 1 bis 3, **dadurch gekennzeichnet, dass** bei der Elektrolyse an der Anode als Nebenprodukt entstehender Sauerstoff aus der Elektrolysezelle (14) abgeführt, ggf. gereinigt und abgetrennt wird.

5. Verfahren zur Herstellung von Ammoniak nach einem der Ansprüche 1 bis 4, **dadurch gekennzeichnet, dass** bei der Elektrolyse gewonnener Ammoniak in mindestens einem weiteren Schritt d) ggf. nach Abtrennung sonstiger Komponenten gemäß Schritt c) in einer Kälteanlage (26) gereinigt wird.

6. Verfahren zur Herstellung von Ammoniak nach einem der Ansprüche 1 bis 5, **dadurch gekennzeichnet, dass** im Falle der Gewinnung des als Edukt eingesetzten Stickstoffs in einer Luftzerlegungsanlage (10) enthaltenes Argon vor der Einspeisung des Stickstoffs in die Elektrolysezelle (14) abgetrennt wird.

7. Verfahren zur Herstellung von Ammoniak nach einem der Ansprüche 1 bis 6, **dadurch gekennzeichnet, dass** der als zweites Edukt gemäß b) eingesetzte Wasserdampf in einem Dampfkessel (15) erzeugt und in Form von Wasserdampf in die Elektrolysezelle (14) eingespeist wird.

8. Verfahren zur Herstellung von Ammoniak nach einem der Ansprüche 1 bis 7, **dadurch gekennzeichnet, dass** in die Elektrolysezelle (14) flüssiges Wasser eingespeist wird und der als zweites Edukt gemäß b) verwendete Wasserdampf in der Elektrolysezelle durch Energiezufuhr und Verdampfen von eingespeisten Wasser erzeugt wird.

9. Verfahren zur Herstellung von Ammoniak nach einem der Ansprüche 1 bis 8, **dadurch gekennzeichnet, dass** die elektrolytische Umsetzung von Stickstoff und Wasser zu Ammoniak bei einer Temperatur von wenigstens etwa 150 °C erfolgt.

10. Verfahren zur Herstellung von Ammoniak nach einem der Ansprüche 1 bis 9, **dadurch gekennzeichnet, dass** die elektrolytische Umsetzung von Stickstoff und Wasser zu Ammoniak bei einem Druck von wenigstens etwa 1500 kPa (15 bar) erfolgt.

11. Verfahren zur Herstellung von Ammoniak nach einem der Ansprüche 1 bis 10, **dadurch gekennzeichnet, dass** zwei oder mehrere Elektrolysezellen (14) vorgesehen sind, die ggf. diskontinuierlich betrieben werden.

12. Verfahren zur Herstellung von Ammoniak nach einem der Ansprüche 1 bis 11, **dadurch gekennzeichnet, dass** für die Ammoniaksynthese inerte Purgegase wenigstens teilweise als Brennstoffe für die Erzeugung von im Verfahren benötigtem Wasserdampf eingesetzt werden.

13. Anlage zur Herstellung von Ammoniak umfassend:
--wenigstens eine Elektrolysezelle (14) geeignet zur Erzeugung von Ammoniak;
--wenigstens eine Einrichtung (13) zur Zuführung von gasförmigem Stickstoff zu dieser Elektrolysezelle (14);
--wenigstens eine Einrichtung (17) zur Zuführung von Wasserdampf oder flüssigem Wasser zu dieser Elektrolysezelle (14);
--wenigstens eine Einrichtung (19) zum Abführen eines Produktstroms aus dieser Elektrolysezelle (14);
--wenigstens eine erste Einrichtung (20) zur Abtrennung einer oder mehrerer von Ammoniak verschiedener Komponenten, nämlich von Stickstoff und gegebenenfalls Argon, aus dem aus der Elektrolysezelle (14) abgeführten Produktstrom;
-- eine dieser ersten Einrichtung (20) im Strömungsweg nachgeschaltete weitere Einrichtung (35) zur Abtrennung von Wasser aus dem verbleibenden Ammoniak-haltigen Produktstrom und
--wenigstens eine Einrichtung (21) zur Rückführung von Wasser oder Wasserdampf zu der Elektrolysezelle (14).

14. Anlage zur Herstellung von Ammoniak nach Anspruch 13, **dadurch gekennzeichnet, dass** diese weiterhin umfasst:
--wenigstens eine Einrichtung (24) zur Rückführung von Stickstoff zu der Elektrolysezelle (14).

15. Anlage zur Herstellung von Ammoniak nach Anspruch 13 oder 14, **dadurch gekennzeichnet, dass** diese weiterhin umfasst:
--wenigstens eine der Einrichtung (20) zur Abtrennung von Ammoniak verschiedener Komponenten nachgeschaltete Kälteanlage (26) zur Aufreinigung des Ammoniaks.

16. Anlage zur Herstellung von Ammoniak nach einem der Ansprüche 13 bis 15, **dadurch gekennzeichnet, dass** diese wenigstens eine der Elektrolysezelle (14) vorgeschaltete Luftzerlegungsanlage (10) umfasst, in der Stickstoff erzeugt wird, welcher der Elektrolysezelle (14) zugeführt wird.

17. Anlage zur Herstellung von Ammoniak nach einem der Ansprüche 13 bis 16, **dadurch gekennzeichnet, dass** diese wenigstens einen Dampferzeuger (15) umfasst, in der Wasserdampf erzeugt wird, welcher der Elektrolysezelle (14) zugeführt wird.

18. Anlage zur Herstellung von Ammoniak nach einem der Ansprüche 13 bis 17, **dadurch gekennzeichnet, dass** diese wenigstens eine Einrichtung (18, 29) zur Abtrennung von in einem aus der Elektrolysezelle abgeführten Nebenproduktstrom enthaltenem Sauerstoff umfasst, insbesondere einen Separator (29), in dem Wasser aus einem Sauerstoffstrom entfernt wird.

19. Anlage zur Herstellung von Ammoniak nach einem der Ansprüche 13 bis 18, **dadurch gekennzeichnet, dass** diese zwei oder mehrere vorzugsweise jeweils diskontinuierlich betreibbare Elektrolysezellen (14) umfasst.

## Claims

1. Process for preparing ammonia by electrolysis using at least one electrolysis cell (14), by
a) feeding nitrogen as the first reactant into the electrolysis cell and
b) using water or water vapor as the second reactant for the electrolysis,
wherein at least one step c) downstream of the electrolysis is provided, in which there is a separation of other components from the ammonia, especially an at least partial separation of one or more components from the group comprising nitrogen, water, argon and hydrogen, **characterized in that**, in a first device (20), nitrogen and optionally argon are separated from the product stream removed from the electrolysis cell (14) and, in a further device (35) connected in the flow pathway downstream of the first device (20), water is separated from the remaining ammonia-containing product stream.

2. Process for preparing ammonia according to Claim 1, **characterized in that** at least one of the nitrogen and water components that are separated off in step c) is recycled into the electrolysis process, and preferably both components are recycled into the electrolysis process as reactants.

3. Process for preparing ammonia according to Claim 1 or 2, **characterized in that** the nitrogen used as the first reactant has been obtained beforehand in an air fractionation plant (10).

4. Process for preparing ammonia according to any of Claims 1 to 3, **characterized in that** oxygen formed as by-product in the electrolysis at the anode is removed from the electrolysis cell (14), optionally purified and separated off.

5. Process for preparing ammonia according to any of Claims 1 to 4, **characterized in that** ammonia obtained in the electrolysis, in at least one further step d), optionally after removing other components in step c), is purified in a refrigeration plant (26).

6. Process for preparing ammonia according to any of Claims 1 to 5, **characterized in that** argon present in the case that the nitrogen used as reactant is obtained in an air fractionation plant (10) is separated off before the nitrogen is fed into the electrolysis cell (14).

7. Process for preparing ammonia according to any of Claims 1 to 6, **characterized in that** the water vapor used as the second reactant in b) is generated in a steam boiler (15) and fed into the electrolysis cell (14) in the form of water vapor.

8. Process for preparing ammonia according to any of Claims 1 to 7, **characterized in that** liquid water is fed into the electrolysis cell (14) and the water vapor used as the second reactant in b) is generated in the electrolysis cell by supply of energy and evaporation of water that has been fed in.

9. Process for preparing ammonia according to any of Claims 1 to 8, **characterized in that** the electrolytic conversion of nitrogen and water to ammonia is effected at a temperature of at least about 150°C.

10. Process for preparing ammonia according to any of Claims 1 to 9, **characterized in that** the electrolytic conversion of nitrogen and water to ammonia is effected at a pressure of at least about 1500 kPa (15 bar).

11. Process for preparing ammonia according to any of Claims 1 to 10, **characterized in that** two or more electrolysis cells (14) are provided and are optionally operated batchwise.

12. Process for preparing ammonia according to any of Claims 1 to 11, **characterized in that**, for the ammonia synthesis, inert purge gases are used at least partly as fuels for the production of water vapor required in the process.

13. Plant for preparation of ammonia, comprising:
-- at least one electrolysis cell (14) suitable for production of ammonia;
-- at least one device (13) for supply of gaseous nitrogen to this electrolysis cell (14);
-- at least one device (17) for supply of water vapor or liquid water to this electrolysis cell (14);
-- at least one device (19) for removal of a product stream from this electrolysis cell (14);
-- at least one first device (20) for separation of one or more components other than ammonia, specifically nitrogen and, optionally, argon from the product stream removed from the electrolysis cell (14) and
-- a further device (35), downstream of the first device (20) in the flow pathway, for separation of water from the remaining ammonia-containing product stream, and
-- at least one device (21) for recycling of water or water vapor to the electrolysis cell (14).

14. Plant for preparation of ammonia according to Claim 13, **characterized in that** it further comprises:
-- at least one device (24) for recycling of nitrogen to the electrolysis cell (14).

15. Plant for preparation of ammonia according to Claim 13 or 14, **characterized in that** it further comprises:
-- at least one refrigeration plant (26), downstream of the device (20) for separation of components other than ammonia, for purification of the ammonia.

16. Plant for preparation of ammonia according to any of Claims 13 to 15, **characterized in that** it comprises at least one air fractionation plant (10), upstream of the electrolysis cell (14), in which nitrogen which is supplied to the electrolysis cell (14) is generated.

17. Plant for preparation of ammonia according to any of Claims 13 to 16, **characterized in that** it comprises at least one steam generator (15) in which water vapor which is supplied to the electrolysis cell (14) is generated.

18. Plant for preparation of ammonia according to any of Claims 13 to 17, **characterized in that** it comprises at least one device (18, 29) for separation of oxygen present in a by-product stream removed from the electrolysis cell, especially a separator (29) in which water is removed from an oxygen stream.

19. Plant for preparation of ammonia according to any of Claims 13 to 18, **characterized in that** it comprises two or more electrolysis cells (14) that are preferably each operable batchwise.

## Revendications

1. Procédé de fabrication d'ammoniac par électrolyse en utilisant au moins une cellule d'électrolyse (14), dans la cellule d'électrolyse,
a) de l'azote étant introduit en tant que premier réactif, et
b) de l'eau ou de la vapeur d'eau étant utilisée en tant que deuxième réactif pour l'électrolyse,
au moins une étape c) en aval de l'électrolyse étant prévue, lors de laquelle une séparation de composants autres que l'ammoniac a lieu, notamment une séparation au moins partielle d'un ou de plusieurs composants du groupe comprenant l'azote, l'eau, l'argon et l'hydrogène,
**caractérisé en ce que**, dans un premier dispositif (20), de l'azote et éventuellement de l'argon sont séparés du courant de produits déchargé de la cellule d'électrolyse (14) et, dans un dispositif supplémentaire (35) en aval du premier dispositif (20) dans la direction de l'écoulement, une séparation d'eau du courant de produits contenant de l'ammoniac restant a lieu.

2. Procédé de fabrication d'ammoniac selon la revendication 1, **caractérisé en ce qu'**au moins un des composants azote et eau séparés à l'étape c) est recyclé dans le procédé d'électrolyse, les deux composants étant de préférence recyclés en tant que réactifs dans le procédé d'électrolyse.

3. Procédé de fabrication d'ammoniac selon la revendication 1 ou 2, **caractérisé en ce que** l'azote utilisé en tant que premier réactif selon a été obtenu auparavant dans une unité de décomposition d'air (10).

4. Procédé de fabrication d'ammoniac selon l'une quelconque des revendications 1 à 3, **caractérisé en ce que** l'oxygène formé à l'anode lors de l'électrolyse en tant que produit secondaire est déchargé de la cellule d'électrolyse (14), éventuellement purifié et séparé.

5. Procédé de fabrication d'ammoniac selon l'une quelconque des revendications 1 à 4, **caractérisé en ce que** l'ammoniac obtenu lors de l'électrolyse est purifié dans une unité réfrigérante (26) lors d'au moins une étape supplémentaire d), éventuellement après la séparation d'autres composants selon l'étape c).

6. Procédé de fabrication d'ammoniac selon l'une quelconque des revendications 1 à 5, **caractérisé en ce que**, lors de l'obtention de l'azote utilisé en tant que réactif dans une unité de décomposition d'air (10), l'argon contenu est séparé avant l'introduction de l'azote dans la cellule d'électrolyse (14).

7. Procédé de fabrication d'ammoniac selon l'une quelconque des revendications 1 à 6, **caractérisé en ce que** la vapeur d'eau utilisée en tant que deuxième réactif selon b) est formée dans une chaudière à vapeur (15) et introduite dans la cellule d'électrolyse (14) sous la forme de vapeur d'eau.

8. Procédé de fabrication d'ammoniac selon l'une quelconque des revendications 1 à 7, **caractérisé en ce que** de l'eau liquide est introduite dans la cellule d'électrolyse (14), et la vapeur d'eau utilisée en tant que deuxième réactif selon b) est formée dans la cellule d'électrolyse par apport d'énergie et évaporation de l'eau introduite.

9. Procédé de fabrication d'ammoniac selon l'une quelconque des revendications 1 à 8, **caractérisé en ce que** la transformation électrolytique d'azote et d'eau en ammoniac a lieu à une température d'au moins environ 150 °C.

10. Procédé de fabrication d'ammoniac selon l'une quelconque des revendications 1 à 9, **caractérisé en ce que** la transformation électrolytique d'azote et d'eau en ammoniac a lieu à une pression d'au moins environ 1 500 kPa (15 bar).

11. Procédé de fabrication d'ammoniac selon l'une quelconque des revendications 1 à 10, **caractérisé en ce que** deux ou davantage de cellules d'électrolyse (14) sont prévues, qui sont éventuellement exploitées de manière discontinue.

12. Procédé de fabrication d'ammoniac selon l'une quelconque des revendications 1 à 11, **caractérisé en ce que** des gaz de purge inertes pour la synthèse d'ammoniac sont au moins partiellement utilisés en tant que combustibles pour la génération de la vapeur d'eau nécessaire dans le procédé.

13. Unité pour la fabrication d'ammoniac, comprenant :
- au moins une cellule d'électrolyse (14) appropriée pour la formation d'ammoniac ;
- au moins un dispositif (13) pour l'introduction d'azote gazeux dans cette cellule d'électrolyse (14) ;
- au moins un dispositif (17) pour l'introduction de vapeur d'eau ou d'eau liquide dans cette cellule d'électrolyse (14) ;
- au moins un dispositif (19) pour le déchargement d'un courant de produits de cette cellule d'électrolyse (14) ;
- au moins un premier dispositif (20) pour la séparation d'un ou de plusieurs composants différents de l'ammoniac, à savoir de l'azote et éventuellement de l'argon, du courant de produits déchargé de la cellule d'électrolyse (14) ;
- un dispositif supplémentaire (35) en aval de ce premier dispositif (20) dans la direction de l'écoulement, pour la séparation d'eau du courant de produits contenant de l'ammoniac restant, et
- au moins un dispositif (21) pour le recyclage d'eau ou de vapeur d'eau dans la cellule d'électrolyse (14) .

14. Unité pour la fabrication d'ammoniac selon la revendication 13, **caractérisée en ce que** celle-ci comprend en outre :
- au moins un dispositif (24) pour le recyclage d'azote dans la cellule d'électrolyse (14).

15. Unité pour la fabrication d'ammoniac selon la revendication 13 ou 14, **caractérisée en ce que** celle-ci comprend en outre :
- au moins une unité réfrigérante (26) pour la purification de l'ammoniac en aval du dispositif (20) pour la séparation de composants différents de l'ammoniac.

16. Unité pour la fabrication d'ammoniac selon l'une quelconque des revendications 13 à 15, **caractérisée en ce que** celle-ci comprend au moins une unité de décomposition d'air (10) en amont de la cellule d'électrolyse (14), dans laquelle de l'azote est formé, qui est introduit dans la cellule d'électrolyse (14).

17. Unité pour la fabrication d'ammoniac selon l'une quelconque des revendications 13 à 16, **caractérisée en ce que** celle-ci comprend au moins un générateur de vapeur (15), dans lequel de la vapeur d'eau est générée, qui est introduite dans la cellule d'électrolyse (14).

18. Unité pour la fabrication d'ammoniac selon l'une quelconque des revendications 13 à 17, **caractérisée en ce que** celle-ci comprend au moins un dispositif (18, 29) pour la séparation de l'oxygène contenu dans un courant de produits secondaires déchargé de la cellule d'électrolyse, notamment un séparateur (29) dans lequel de l'eau est éliminée d'un courant d'oxygène.

19. Unité pour la fabrication d'ammoniac selon l'une quelconque des revendications 13 à 18, **caractérisée en ce que** celle-ci comprend deux ou davantage de cellules d'électrolyse (14) pouvant de préférence chacune être exploitées de manière discontinue.
